(19)

Europäisches
Patentamt
European
Patent Office
Office européen
des brevets

(11) **EP 3 893 153 A2**

(12) **EUROPEAN PATENT APPLICATION**

(43) Date of publication:
**13.10.2021 Bulletin 2021/41**

(51) Int Cl.:
***G06K 9/00*** *(2006.01)*   ***G06K 9/62*** *(2006.01)*

(21) Application number: **21180579.1**

(22) Date of filing: **21.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020 CN 202011143075**

(71) Applicant: **BEIJING BAIDU NETCOM SCIENCE AND TECHNOLOGY CO. LTD.**
**100085 Beijing (CN)**

(72) Inventor: **TIAN, Fei**
**Beijing, 100085 (CN)**

(74) Representative: **V.O.**
**P.O. Box 87930**
**2508 DH Den Haag (NL)**

(54) **METHOD AND APPARATUS FOR TRAINING CROSS-MODAL FACE RECOGNITION MODEL, DEVICE AND STORAGE MEDIUM**

(57)    Embodiments of the present disclosure disclose a method and apparatus for training a cross-modal face recognition model, a device and a storage medium, and relates to the fields of computer vision, deep learning, big data and face recognition technologies. A specific implementation of the method includes: acquiring a first modal face recognition model having a predetermined recognition precision; acquiring a first modality image of a face and a second modality image of the face; acquiring a feature value of the first modality image of the face and a feature value of the second modality image of the face; and constructing a loss function based on a difference between the feature value of the first modality image of the face and the feature value of the second modality image of the face, and tuning a parameter of the first modal face recognition model based on the loss function until the loss function converges, to obtain a trained cross-modal face recognition model. Therefore, a domain migration technology is adopted to migrate the classification capability of the first modal recognition model of the face to other modal data of the face, so as to achieve the purpose of enhancing the capability to recognize other modalities of the face.

200

Acquiring a first modal face recognition model trained using a first modality image of a face and having a predetermined recognition precision — 201

Acquiring the first modality image of the face and a second modality image of the face — 202

Inputting the first modality image of the face and the second modality image of the face into the first modal face recognition model to obtain a feature value of the first modality image of the face and a feature value of the second modality image of the face — 203

Constructing a loss function based on a difference between the feature value of the first modality image of the face and the feature value of the second modality image of the face, and tuning a parameter of the first modal face recognition model based on the loss function until the loss function converges, to obtain a trained cross-modal face recognition model — 204

Fig. 2

**EP 3 893 153 A2**

# Description

## TECHNICAL FIELD

The present disclosure relates to the field of computer technology, specifically to the fields of computer vision, deep learning, big data and face recognition technologies, and particularly to a method and apparatus for training a cross-modal face recognition model, a device and a storage medium.

## BACKGROUND

At present, a commonly applied camera is an RGB (colors of a red channel, a green channel and a blue channel) camera. It is relatively easy to acquire face data of an RGB modality, and training data of an RGB modal face recognition model is sufficient. However, in addition to the RGB modality, there is more face data of other modalities, for example, Depth and NIR (near infrared). Due to the great difficulty in cost or technology, there is very few face data of other modalities at present.

## SUMMARY

In order to solve one or more of the technical problems mentioned in the Background section, embodiments of the present disclosure provide a method and apparatus for training a cross-modal face recognition model, a device, a storage medium, and a computer program product.

According to a first aspect, an embodiment of the present disclosure provides a method for training a cross-modal face recognition model, including: acquiring a first modal face recognition model trained using a first modality image of a face and having a predetermined recognition precision; acquiring the first modality image of the face and a second modality image of the face; inputting the first modality image of the face and the second modality image of the face into the first modal face recognition model to obtain a feature value of the first modality image of the face and a feature value of the second modality image of the face; and constructing a loss function based on a difference between the feature value of the first modality image of the face and the feature value of the second modality image of the face, and tuning a parameter of the first modal face recognition model based on the loss function until the loss function converges, to obtain a trained cross-modal face recognition model.

According to a second aspect, an embodiment of the present disclosure provides an apparatus for training a cross-modal face recognition model, including: a model acquiring module, configured to acquire a first modal face recognition model trained using a first modality image of a face and having a predetermined recognition precision; an image acquiring module, configured to acquire the first modality image of the face and a second modality image of the face; a feature value acquiring module, configured to input the first modality image of the face and the second modality image of the face into the first modal face recognition model to obtain a feature value of the first modality image of the face and a feature value of the second modality image of the face; and a model parameter tuning module, configured to construct a loss function based on a difference between the feature value of the first modality image of the face and the feature value of the second modality image of the face, and tune a parameter of the first modal face recognition model based on the loss function until the loss function converges, to obtain a trained cross-modal face recognition model.

According to a third aspect, an embodiment of the present disclosure provides an electronic device, including: at least one processor; and a storage device, communicated with the at least one processor. The storage device stores an instruction executable by the at least one processor, and the instruction is executed by the at least one processor, to enable the at least one processor to perform the method according to any implementation in the first aspect.

According to a fourth aspect, an embodiment of the present disclosure provides a non-transitory computer readable storage medium, storing a computer instruction. The computer instruction is used to cause a computer to perform the method according to any implementation in the first aspect.

According to a fifth aspect, an embodiment of the present disclosure provides a computer program product, comprising a computer program. The computer program, when executed by a processor, implements the method according to any implementation in the first aspect.

According to the method and apparatus for training a cross-modal face recognition model, the device and the storage medium that are provided in the embodiments of the present disclosure, the first modal face recognition model trained using the first modality image of the face and having the predetermined recognition precision is first acquired. Then, the first modality image of the face and the second modality image of the face are acquired. The first modality image of the face and the second modality image of the face are inputted into the first modal face recognition model to obtain the feature value of the first modality image of the face and the feature value of the second modality image of the face. Finally, the loss function is constructed based on the difference between the feature value of the first modality image of the face and the feature value of the second modality image of the face, and the parameter of the first modal face recognition model is tuned based on the loss function until the loss function converges, to obtain the trained cross-modal face recognition model. Therefore, a domain migration technology is adopted to migrate the classification capability of the first modal recognition model of the face to other modal data of the face, so as to achieve the purpose of enhancing the capability to recognize other modalities of the face.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

After reading detailed descriptions for non-limiting embodiments given with reference to following accompanying drawings, other features, objectives and advantages of the present disclosure will be more apparent. The accompanying drawings are used for a better understanding of the scheme, and do not constitute a limitation to the present disclosure.

Fig. 1 is a diagram of an example system architecture in which embodiments of the present disclosure may be applied;

Fig. 2 is a schematic flowchart of a method for training a cross-modal face recognition model according to an embodiment of the present disclosure;

Fig. 3 is a schematic structural diagram of an apparatus for training a cross-modal face recognition model according to an embodiment of the present disclosure; and

Fig. 4 is a block diagram of an electronic device used to implement a method for training a cross-modal face recognition model according to embodiments of the present disclosure.

DETAILED DESCRIPTION OF EMBODIMENTS

The present disclosure is further described below in detail by combining accompanying drawings and embodiments. It may be appreciated that the specific embodiments described herein are merely used for explaining the relevant disclosure, rather than limiting the disclosure. In addition, it should also be noted that, for the ease of description, only the parts related to the relevant disclosure are shown in the accompanying drawings.

It should be noted that embodiments in the present disclosure and the features in the embodiments may be combined with each other on a non-conflict basis. The present disclosure will be described below in detail with reference to the accompanying drawings and in combination with the embodiments.

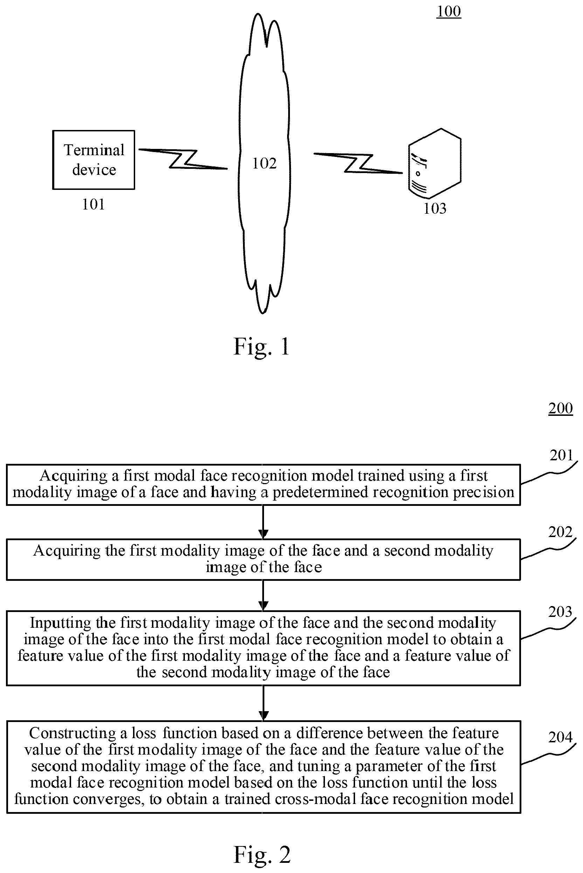

Fig. 1 illustrates an example system architecture 100 in which a method for training a cross-modal face recognition model or an apparatus for training a cross-modal face recognition model according to embodiments of the present disclosure may be applied.

As shown in Fig. 1, the system architecture 100 may include a terminal device 101, a network 102 and a server 103. The network 102 serves as a medium providing a communication link between the terminal device 101 and the server 103. The network 102 may include various types of connections, for example, wired or wireless communication links, or optical fiber cables.

The terminal device 101 may interact with the server 103 via the network 102. A first modality image of a face and a second modality image of the face may be provided from the terminal device 101, including, but not limited to, a database, a user terminal, and the like.

The server 103 may provide various services. For example, the server 103 may perform processing such as analyzing on data (e.g., the first modality image of the face and the second modality image of the face) acquired from the terminal device 101, and generate a processing result (e.g., obtain a trained cross-modal face recognition model).

It should be noted that the server 103 may be hardware or software. When the server 103 is the hardware, the server 103 may be implemented as a distributed server cluster composed of a plurality of servers, or may be implemented as a single server. When the server 103 is the software, the server 103 may be implemented as a plurality of pieces of software or a plurality of software modules (e.g., software or software modules for providing a distributed service), or may be implemented as a single piece of software or a single software module, which will not be specifically defined here.

It should be noted that the method for training a cross-modal face recognition model provided in embodiments of the present disclosure is generally performed by the server 103. Correspondingly, the apparatus for training a cross-modal face recognition model is generally provided in the server 103.

It should be appreciated that the numbers of the terminal devices, the networks, and the servers in Fig. 1 are merely illustrative. Any number of terminal devices, networks, and servers may be provided based on actual requirements.

Further referring to Fig. 2, Fig. 2 illustrates a flow 200 of a method for training a cross-modal face recognition model according to an embodiment of the present disclosure. The method includes the following steps.

Step 201, acquiring a first modal face recognition model trained using a first modality image of a face and having a predetermined recognition precision.

In this embodiment, an executing body (e.g., the server 103 shown in Fig. 1) of the method for training a cross-modal face recognition model may acquire the first modal face recognition model having the predetermined recognition precision.

Here, the process of training the first modal face recognition model includes: acquiring a feature vector of the first modality image of the face; using the feature vector of the first modality image of the face as an input of the first modal face recognition model, and using a data tag corresponding to the feature vector of the first modality image of the face as an output of the first modal face recognition model, to train an initial model of the first modal face recognition model, and generating the trained first modal face recognition model. After the training for the first modal face recognition model is completed, a determination is required to be performed on the recognition precision of the first modal face recognition model, and the first modal face recognition model reaching the predetermined recognition precision is outputted.

Specifically, the recognition precision of the trained first modal face recognition model is determined by: testing the recognition precision of the trained first modal face recognition model by using a test set composed of the first modality image of the face, to determine whether the recognition precision of the trained first modal face recognition model is greater than or equal to a preset threshold value (e.g., 90%); if the recognition precision of the first modal face recognition model is greater than the preset threshold value, outputting the first modal face recognition model; and if the recognition precision of the first modal face recognition model is less than the preset threshold value, using a different sample to re-extract a face feature vector of the first modality image of the face, continuing to train the first modal face recognition model until the face recognition precision of the first modal face recognition model is greater than or equal to the preset threshold value, and outputting the trained first modal face recognition model reaching the predetermined recognition precision.

In this embodiment, the initial model of the first modal face recognition model may be the first modal face recognition model that is not trained or the first modal face recognition model for which the training is not completed. Each layer of an initialized first modal face recognition model may be provided with an initial parameter, and the parameter may be continuously tuned during the training for the first modal face recognition model.

The initial model of the first modal face recognition model may refer to various types of artificial neural networks which are not trained or for which training is not completed, or refer to a model obtained by combining a plurality of artificial neural networks which are not trained or for which training is not completed. For example, the initial model of the first modal face recognition model may be an untrained convolutional neural network, an untrained recurrent neural network, or a model obtained by combining the untrained convolutional neural network, the untrained recurrent neural network and an untrained fully connected layer. The initial model of the first modal face recognition model may be any kind of classification neural network model, for example, Mobilenetv1/v2/v3, and Resnet.

Step 202, acquiring the first modality image of the face and a second modality image of the face.

In this embodiment, the above executing body can acquire the first modality image of the face and the second modality image of the face. Here, the first modality image of the face may refer to face modality data of which the amount is sufficient, and the second modality image of the face may refer to face modality data of which the amount is small. The modalities presented by the images obtained using different imaging principles and devices are also different.

For example, the first modality image of the face may be an RGB image, a CT image, an MRI image, a PET image, or the like, and the second modality image of the face may be an NIR image, a Depth image, or the like.

As an example, an RGB color pattern is a color standard in the industry, and is to obtain various colors through a change of the channels of three colors (red (R), green (G), and blue (B)) and a superposition therebetween, and RGB are colors representing a red channel, a green channel and a blue channel. The RGB image may be collected by a common camera.

However, the NIR (near infrared) image or the Depth image needs to be collected by a professional equipment (e.g., a Kinect or RealSense multimodal camera), and thus, it is often difficult to collect the NIR image or the Depth image, resulting in a small amount of data.

Since the amount of data of the first modality image of the face is sufficient, the face recognition model trained through the first modality image of the face has a high recognition precision. However, since the amount of data of the second modality image of the face is small, the face recognition model trained through the second modality image of the face is often prone to overfitting, which affects the recognition precision.

Step 203, inputting the first modality image of the face and the second modality image of the face into the first modal face recognition model to obtain a feature value of the first modality image of the face and a feature value of the second modality image of the face.

In this embodiment, the above executing body inputs the first modality image of the face and the second modality image of the face into the first modal face recognition model. Here, the first modal face recognition model refers to the first modal face recognition model that is obtained by performing the above step 201 and has the predetermined recognition precision.

Here, the first modality image of the face and the second modality image of the face are inputted into the first modal face recognition model, and thus, the feature value of the first modality image of the face and the feature value of the second modality image of the face may be obtained. For example, the first modality image of the face or the second modality image of the face pass through a convolution kernel in the neural network model, and each convolution kernel may extract a feature value of an image.

Step 204, constructing a loss function based on a difference between the feature value of the first modality image of the face and the feature value of the second modality image of the face, and tuning a parameter of the first modal face recognition model based on the loss function until the loss function converges, to obtain a trained cross-modal face recognition model.

In this embodiment, the above executing body constructs the loss function based on the difference between the feature value of the first modality image of the face and the feature value of the second modality image of the face. After the loss function is constructed, the parameter of the first modal face recognition model may be tuned according to the loss function until the loss function converges.

Specifically, the parameter of the first modal face recognition model is tuned, such that the distributions of the feature value of the first modality image of the face and the feature value of the second modality image of the face reach a predetermined similarity (e.g., 90%), thereby obtaining the trained cross-modal face recognition model.

As compared with the existing technology, according to the method for training a cross-modal face recognition model in the above embodiment of the present disclosure, the face recognition model trained through the first modality image of the face has the high recognition precision due to the sufficient amount of data of the first modality image of the face. However, in the embodiment of the present disclosure, by constraining the loss function and training a scheme, a domain migration technology is adopted to migrate the strong classification capability of the first modal recognition model of the face to other modal data of the face, so as to achieve the purpose of enhancing the capability to recognize other modalities of the face.

In some alternative implementations of the above embodiment, the acquiring the first modality image of the face and a second modality image of the face in step 202 includes: acquiring a number of first modality images of the face and an equal number of second modality images of the face. Specifically, image training data may be divided into a plurality of batches, and each batch is divided into two equal parts. One part has only the first modality images of the face and the other part has only the second modality images of the face. For example, a batch of image training data are 2,048 images, of which 1,024 images are images of the first modality of the face and the other 1,024 images are images of the second modality of the face. By dividing the image training data into the first modality images of the face and the second modality images of the face that have the equal numbers, the sample equalization may be achieved, thus preventing a certain image category from being trained in the network model.

In some alternative embodiments of this embodiment, the loss function may have a function mapping relationship with a mean value of feature values of the first modality images of the face and a mean value of feature values of the second modality images of the face. The loss function may also have a function mapping relationship with a variance of the feature values of the first modality images of the face and a variance of the feature values of the second modality images of the face. The loss function may also have a function mapping relationship with the mean value and variance of the feature values of the first modality images of the face and the mean value and variance of the feature values of the second modality images of the face. For example, the loss function is as follows:

$$\mathcal{L}_{dist} = \frac{1}{2}\left[\|u_N^{(i)} - u_V^{(i)}\|_2^2 + \|\sigma_N^{(i)} - \sigma_V^{(i)}\|_2^2\right].$$

Here, in the loss function $L_{dist}$, $U_N$ represents the mean value of feature values of the second modality images of the face, $U_V$ represents the mean value of feature values of the first modality images of the face, $\sigma_n$ represents the variance of the feature values of the second modality images of the face, and $\sigma_V$ represents the variance of the feature values of the first modality images of the face. The parameter of the first modal face recognition model is tuned, such that the mean value $U_V$ of feature values of the first modality images of the face and the mean value $U_N$ of the mean value of feature values of the second modality images of the face reach a predetermined similarity (e.g., 99%); and/or the variance $\sigma_V$ of the feature values of the first modality images of the face and the variance $\sigma_n$ of the feature values of the second modality images of the face reach a predetermined similarity (e.g., 99%). The closer the mean value of feature values of the first modality images of the face and the mean value of feature values of the second modality images of the face are, or the closer the variance of the feature values of the first modality images of the face and the variance of the feature values of the second modality images of the face are, the smaller the value of the loss function is.

In some alternative embodiments of the above embodiment, the method further includes: fine-tuning the trained cross-modal face recognition model by using a first modality image and a second modality image of a given face, to obtain an optimized cross-modal face recognition model. After the training for the cross-modal face recognition model is completed, the fine-tuning may be performed using mixed-modal data of the face, that is, a first modality image and a second modality image of the same person that have consistent tags. A specific fine-tuning process is as follows: the weight of the network backbone part of the cross-modal face recognition model is first fixed (i.e., no training is performed), and only the last fully connected layer of the model is trained; and after the precision of a training set trained in a previous step reaches a preset threshold value (e.g., 90%), all network layer parameters of the model are unlocked for training (i.e., all networks are trained). The fine-tuning for the cross-modal face recognition model is conductive to improving the precision of the face recognition of the cross-modal face recognition model.

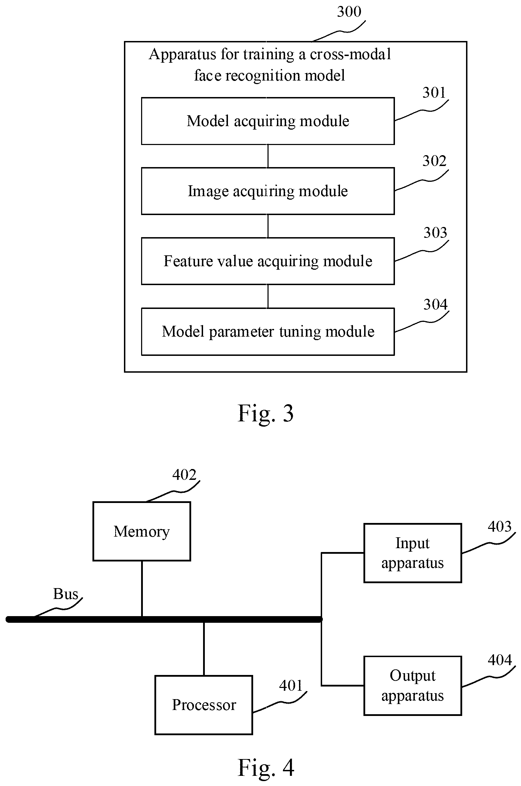

Further referring to Fig. 3, as an implementation of the method shown in the above drawings, an embodiment of the present disclosure provides an apparatus for training a cross-modal face recognition model. The embodiment of the apparatus corresponds to the embodiment of the method shown in Fig. 2, and the apparatus may be applied in various electronic devices.

As shown in Fig. 3, the apparatus 300 for training a cross-modal face recognition model in this embodiment may include: a model acquiring module 301, an image acquiring module 302, a feature value acquiring module 303 and a model parameter tuning module 304. Here, the model acquiring module 301 is configured to acquire a first modal face recognition model trained using a first modality image of a face and having a predetermined recognition precision. The image acquiring module 302 is configured to acquire the first modality image of the face and a second modality image of the face. The feature value acquiring module 303 is configured to input the first modality image of the face and the second modality image of the face into the first modal face recognition model to obtain a feature value of the first modality image of the face and a feature value of the second modality image of the face. The model parameter tuning module 304 is configured to construct a loss function based on a difference between the feature value of the first modality image of the face and the feature value of the second modality image of the face, and tune a parameter of the first modal face recognition model based on the loss function until the loss function converges, to obtain a trained cross-modal face recognition model.

In this embodiment, for specific processes of the model acquiring module 301, the image acquiring module 302, the feature value acquiring module 303 and the model parameter tuning module 304 in the apparatus 300 for training a cross-modal face recognition model, and their technical effects, reference may be respectively made to relative descriptions of steps 201-204 in the corresponding embodiment of Fig. 2, which will not be repeatedly described here.

In some alternative implementations of this embodiment, the image acquiring module is further configured to: acquire a number of first modality images of the face and an equal number of second modality images of the face.

In some alternative implementations of this embodiment, the model parameter tuning module is further configured to: tune the parameter of the first modal face recognition model until at least one of following conditions is satisfied: a mean value of feature values of the first modality images of the face and a mean value of feature values of the second modality images of the face reach a predetermined similarity; and a variance of the feature values of the first modality images of the face and a variance of the feature values of the second modality images of the face reach the predetermined similarity.

In some alternative implementations of this embodiment, the apparatus further includes: a fine-tuning module, configured to fine-tune the trained cross-modal face recognition model by using a first modality image and a second modality image of a given face, to obtain an optimized cross-modal face recognition model.

In some alternative implementations of this embodiment, the first modality image is an RGB image, and the second modality image is at least one of an NIR image or a Depth image.

An embodiment of the present disclosure further provides a computer program product, including a computer program. The computer program, when executed by a processor, implements the method for training a cross-modal face recognition model according to any embodiment as described above.

As shown in Fig. 4, Fig. 4 is a block diagram of an electronic device of the method for training a cross-modal face recognition model according to the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital assistant, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 4, the electronic device includes: one or more processors 401, a memory 402, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 4, one processor 401 is used as an example.

The memory 402 is a non-transitory computer readable storage medium provided by the present disclosure. The memory stores instructions executable by at least one processor, so that the at least one processor performs the method for training a cross-modal face recognition model provided by the present disclosure. The non-transitory computer readable storage medium of the present disclosure stores computer instructions for causing a computer to perform the method for training a cross-modal face recognition model provided by the present disclosure.

The memory 402, as a non-transitory computer readable storage medium, may be used to store non-transitory software programs, non-transitory computer executable programs and modules, such as program instructions/modules corresponding to the method for training a cross-modal face recognition model in the embodiments of the present disclosure (for example, the model acquiring module 301, the image acquiring module 302, the feature value acquiring module 303, and the model parameter tuning module shown in Fig. 5). The processor 401 executes the non-transitory software programs, instructions, and modules stored in the memory 402 to execute various functional applications and data processing of the server, that is, to implement the method for training a cross-modal face recognition model in the foregoing method embodiment.

The memory 402 may include a storage program area and a storage data area, where the storage program area may store an operating system and at least one function required application program; and the storage data area may store data created by the use of the electronic device according to the method for training a cross-modal face recognition model, etc. In addition, the memory 602 may include a high-speed random access memory, and may also include a non-transitory memory, such as at least one magnetic disk storage device, a flash memory device, or other non-transitory solid-state storage devices. In some embodiments, the memory 402 may optionally include memories remotely provided with respect to the processor 601, and these remote memories may be connected to the electronic device of the method for training a cross-modal face recognition model through a network. Examples of the above network include but are not limited to the Internet, intranet, local area network, mobile communication network, and combinations thereof.

The electronic device of the method for training a cross-modal face recognition model may further include: an input apparatus 403 and an output apparatus 404. The processor 401, the memory 402, the input apparatus 403, and the output apparatus 404 may be connected through a bus or in other methods. In Fig. 4, connection through a bus is used as an example.

The input apparatus 403 may receive input digital or character information, and generate key signal inputs related to user settings and function control of the electronic device of the method for training a cross-modal face recognition model, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution provided in embodiments of the present disclosure, a first modal face recognition model trained using a first modality image of a face and having a predetermined recognition precision is first acquired. Then, the first modality image of the face and a second modality image of the face are acquired. The first modality image of the face and the second modality image of the face are inputted into the first modal face recognition model to obtain a feature value of the first modality image of the face and a feature value of the second modality image of the face. Finally, a loss function is constructed based on a difference between the feature value of the first modality image of the face and the feature value of the second modality image of the face, and a parameter of the first modal face recognition model is tuned based on the loss function until the loss function converges, to obtain a trained cross-modal face recognition model. Therefore, a domain migration technology is adopted to migrate the classification capability of the first modal recognition model of the face to other modal data of the face, so as to achieve the purpose of enhancing the capability to recognize other modalities of the face.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method for training a cross-modal face recognition model, comprising:

   acquiring (201) a first modal face recognition model trained using a first modality image of a face and having a predetermined recognition precision;
   acquiring (202) the first modality image of the face and a second modality image of the face;
   inputting (203) the first modality image of the face and the second modality image of the face into the first modal face recognition model to obtain a feature value of the first modality image of the face and a feature value of the second modality image of the face; and
   constructing (204) a loss function based on a difference between the feature value of the first modality image of the face and the feature value of the second modality image of the face, and tuning a parameter of the first modal face recognition model based on the loss function until the loss function converges, to obtain a trained cross-modal face recognition model.

2. The method according to claim 1, wherein the acquiring the first modality image of the face and a second modality image of the face comprises:

   acquiring a number of first modality images of the face and an equal number of second modality images of the face.

3. The method according to claim 1 or 2, wherein the tuning a parameter of the first modal face recognition model based on the loss function until the loss function converges, comprises:

   tuning the parameter of the first modal face recognition model until at least one of following conditions is satisfied: a mean value of feature values of the first modality images of the face and a mean value of feature values of the second modality images of the face reach a predetermined similarity; and a variance of the feature values of the first modality images of the face and a variance of the feature values of the second modality images of the face reach the predetermined similarity.

4. The method according to any one of claims 1-3, further comprising:

   fine-tuning the trained cross-modal face recognition model by using a first modality image and a second modality image of a given face, to obtain an optimized cross-modal face recognition model.

5. The method according to any one of claims 1-4, wherein the first modality image is an RGB image, and the second modality image is at least one of an NIR image or a Depth image.

6. An apparatus for training a cross-modal face recognition model, comprising:

a model acquiring module (301), configured to acquire a first modal face recognition model trained using a first modality image of a face and having a predetermined recognition precision; an image acquiring module (302), configured to acquire the first modality image of the face and a second modality image of the face; a feature value acquiring module (303), configured to input the first modality image of the face and the second modality image of the face into the first modal face recognition model to obtain a feature value of the first modality image of the face and a feature value of the second modality image of the face; and a model parameter tuning module (304), configured to construct a loss function based on a difference between the feature value of the first modality image of the face and the feature value of the second modality image of the face, and tune a parameter of the first modal face recognition model based on the loss function until the loss function converges, to obtain a trained cross-modal face recognition model.

7. The apparatus according to claim 6, wherein the image acquiring module (302) is further configured to:

acquire a number of first modality images of the face and an equal number of second modality images of the face.

8. The apparatus according to claim 6 or 7, wherein the model parameter tuning module (304) is further configured to:

tune the parameter of the first modal face recognition model until at least one of following conditions is satisfied: a mean value of feature values of the first modality images of the face and a mean value of feature values of the second modality images of the face reach a predetermined similarity; and a variance of the feature values of the first modality images of the face and a variance of the feature values of the second modality images of the face reach the predetermined similarity.

9. The apparatus according to any one of claims 6-8, further comprising:

a fine-tuning module, configured to fine-tune the trained cross-modal face recognition model by using a first modality image and a second modality image of a given face, to obtain an optimized cross-modal face recognition model.

10. The apparatus according to any one of claims 6-9, wherein the first modality image is an RGB image, and the second modality image is at least one of an NIR image or a Depth image.

11. An electronic device, comprising:

at least one processor (401); and a memory (402), communicated with the at least one processor, wherein the memory (402) stores an instruction executable by the at least one processor (401), and the instruction is executed by the at least one processor (401), to enable the at least one processor (401) to perform the method according to any one of claims 1-5.

12. A non-transitory computer readable storage medium, storing a computer instruction, wherein the computer instruction is used to cause a computer to perform the method according to any one of claims 1-5.

13. A computer program product, comprising a computer program, wherein the computer program, when executed by a processor, implements the method according to any one of claims 1-5.

<u>100</u>

Terminal
device

101

102

103

Fig. 1

<u>200</u>

201

Acquiring a first modal face recognition model trained using a first modality image of a face and having a predetermined recognition precision

202

Acquiring the first modality image of the face and a second modality image of the face

203

Inputting the first modality image of the face and the second modality image of the face into the first modal face recognition model to obtain a feature value of the first modality image of the face and a feature value of the second modality image of the face

204

Constructing a loss function based on a difference between the feature value of the first modality image of the face and the feature value of the second modality image of the face, and tuning a parameter of the first modal face recognition model based on the loss function until the loss function converges, to obtain a trained cross-modal face recognition model

Fig. 2

300

Apparatus for training a cross-modal
face recognition model

Model acquiring module — 301

Image acquiring module — 302

Feature value acquiring module — 303

Model parameter tuning module — 304

Fig. 3

Memory — 402

Input
apparatus — 403

Bus

Processor — 401

Output
apparatus — 404

Fig. 4